# EUROPÄISCHE PATENTSCHRIFT

(11) **EP 1 216 905 B1**
(45) Veröffentlichungstag und Bekanntmachung des Hinweises auf die Patenterteilung: **27.12.2006**
(21) Anmeldenummer: 01126749.9
(22) Anmeldetag: 09.11.2001
(51) Int. Cl.: B60T 8/88, B60T 8/00

(54) **Verfahren und Vorrichtung zum Abgleichen des Offset eines Druckwertes**
Method and device for pressure signal offset compensation
Procédé et dispositif de compensation de décalage pour un capteur de pression

(30) Priorität: 23.12.2000 DE 10065022
(43) Veröffentlichungstag der Anmeldung: 26.06.2002
(73) Patentinhaber: ROBERT BOSCH GMBH, 70442 Stuttgart (DE)
(72) Erfinder: Braun, Thomas, 71711 Murr (DE)

(56) Entgegenhaltungen:
- EP-A- 0 758 739
- DE-A- 19 914 403
- US-A- 5 304 941
- PATENT ABSTRACTS OF JAPAN vol. 1999, no. 09, 30. Juli 1999 (1999-07-30) & JP 11 091549 A (TOYOTA MOTOR CORP), 6. April 1999 (1999-04-06)

## Beschreibung

Die Erfindung betrifft ein Verfahren zum Abgleichen des Offset eines Druckwertes mit den Schritten: Detektieren eines Druckwertes, Tiefpassfiltern des Druckwertes und Speichern des tiefpassgefilterten Druckwertes als Offsetwert. Die Erfindung betrifft ferner eine Vorrichtung zum Abgleichen des Offset eines Druckwertes mit Mitteln zum Detektieren eines Druckwertes, Mitteln zum Tiefpassfiltern des Druckwertes und Mitteln zum Speichern des tiefpassgefilterten Druckwertes als Offsetwert.

### Stand der Technik

Bei zahlreichen Systemen zur Regelung der Fahrdynamik ist es erforderlich, den Druck im Bremssystem exakt zu bestimmen. Beispielsweise wird bei dem elektronischen Stabilitätsprogramm (ESP) der Fahrzustand des Wagens in kurzen Zeitabständen, beispielsweise 25 mal in der Sekunde, überwacht. Durch gezielte Bremseingriffe auf jedes einzelne Rad und gegebenenfalls durch Reduktion der Motorleistung wird das Fahrzeug stabilisiert und zurück in die Spur gebracht. In einer untersteuerten Kurve beispielsweise bricht das Fahrzeug nach außen aus. Das elektronische Stabilitätsprogramm (ESP) bremst vor dem Ausbrechen das kurveninnere Rad ab und reduziert die Motorleistung. Dadurch wird der Wagen in der Kurve gehalten.

Da es von hoher Wichtigkeit ist, den Druck in dem Bremssystem genau zu kennen, so dass wirkungsvolle Eingriffe in das Bremssystem über den Druck erfolgen können, ist es sinnvoll, den Offsetwert des Drucksensorsignals möglichst exakt zu bestimmen. Auf diese Weise kann eine hohe Regelgüte erreicht werden, und bei einem Druckwert, welcher eine Maximalgröße überschreitet, kann auf einen fehlerhaften Druckwert erkannt werden. Bei der Offsetermittlung muss sichergestellt sein, dass weder intern, etwa durch die Wirkung der Vorlade- beziehungsweise der Rückförderpumpe, noch extern aufgrund eines Bremswunsches des Fahrers, der über das Bremspedal erkannt wird, ein erhöhter Druckwert anstehen darf. Nur in diesen Fällen darf ein Offsetabgleich erfolgen, da andernfalls etwa beim Betätigen des Bremspedals, ein erhöhtes Drucksensorsignal vorliegt, wobei die Erhöhung nicht aufgrund eines drucksensor- oder leitungsbedingt erhöhten Offsets zustande kommt.

Problematisch bei der Erkennung der Voraussetzungen für einen erlaubten Offsetabgleich ist insbesondere das rechtzeitige Erkennen des Bremswunschs des Fahrers. Dies hat vor allem den Grund, dass bei verschiedenen Kraftfahrzeugen der Effekt auftritt, dass, insbesondere aufgrund von Elastizitäten in der Pedalerie, bei schneller hochdynamischer Bremspedalbetätigung, beispielsweise bei einer Panikbremsung, der Bremslichtschalter erst gesetzt wird, wenn schon ein dem Bremswunsch entsprechender Druckwert ansteht. Das Setzten des Bremslichtschalters, welches bei zahlreichen Systemen als Indikator für den Bremswunsch verwendet wird, kann beispielsweise mit 20 bis 60 ms Zeitverzug auftreten.

Der zum Zeitpunkt des Auftretens des Bremslichtschaltersignals ermittelte Druckwert entspricht dann nicht dem tatsächlichen Offsetwert, beziehungsweise er liegt schon oberhalb der Abschaltschwelle zur Fehlererkennung. Bei bestehenden Logiken wird eine Tiefpassfilterung des Drucksignals permanent durchgeführt, wenn die Zulassungsbedingungen
- Fahrer betätigt nicht das Bremspedal,
- Vorlade- oder Rückförderpumpe sind nicht angesteuert beziehungsweise laufen nicht mehr nach,
- keine Unterspannung im System,
- kein Restdruck im System
für eine bestimmte Zeitdauer gültig waren. Aufgrund des oben erwähnten verspäteten Setzens des Bremslichtschalters wird die erste Zulassungsbedingung, wonach der Fahrer nicht das Bremspedal betätigt, verletzt. Ein zuverlässiger Offsetabgleich kann demnach nicht mehr erfolgen.

Ein Verfahren bzw. eine Vorrichtung gemäß dem Oberbegriff der Ansprüche 1 bzw. 9 ist aus der DE 199 14 403 A1 bekannt.

### Vorteile der Erfindung

Die Erfindung baut auf dem gattungsgemäßen Verfahren dadurch auf, dass der tiefpassgefilterte Druckwert als Offsetwert gespeichert wird, wenn zumindest die Voraussetzung vorliegt, dass ein logisches Signal einen ersten Wert hat beziehungsweise annimmt, und dass ein Ersatzwert als Offsetwert gespeichert wird, wenn das logische Signal einen zweiten Wert hat beziehungsweise annimmt. Auf diese Weise wird erreicht, dass ein neuer tiefpassgefilterter Druckwert als Offsetwert nur dann gespeichert wird, wenn eine bestimmte Voraussetzung vorliegt. Diese Voraussetzung liegt dann vor, wenn der Fahrer keinen Bremswunsch angezeigt hat, etwa durch plötzliches Betätigen des Bremspedals. Liegt allerdings ein solcher Bremswunsch vor, das heißt, das logische Signal hat einen zweiten Wert, so ist aus Sicherheitsgründen davon auszugehen, dass der Druck im System und damit der tiefpassgefilterte Druckwert bereits einen erhöhten Wert angenommen haben. Folglich wird der tiefpassgefilterte Druckwert in dem Fall, dass das logische Signal einen zweiten Wert hat, nicht als Offsetwert gespeichert. Vielmehr wird ein Ersatzwert herangezogen. Der Offsetabgleich wird also für einen Zeitraum, in welchem ein Bremswunsch vorliegt, eingefroren. In Zeiten ohne Bremswunsch findet der Offsetabgleich dann wieder kontinuierlich statt.

Es ist besonders vorteilhaft, dass das logische Signal den ersten Wert hat beziehungsweise annimmt, wenn ein Bremslichtschalter nicht gesetzt wird beziehungsweise ist und dass das logische Signal den zweiten Wert hat beziehungsweise annimmt, wenn ein Bremslichtschalter gesetzt wird beziehungsweise ist. Das Bremslichtschaltersignal wird somit als Kriterium dafür verwendet, ob ein Bremswunsch des Fahrers vorliegt. Wird der Bremslichtschalter gesetzt, so liegt mit großer Wahrscheinlichkeit ein durch den Bremswunsch veranlasster erhöhter Druck im Bremssystem vor. Folglich wird kein Offsetabgleich vorgenommen.

Es ist von besonderem Vorteil, dass eine Abfrage des logischen Signals in einem Zeitraster erfolgt, welches aufeinanderfolgende Zeitintervalle aufweist, dass der tiefpassgefilterte Druckwert des vorangehenden Zeitintervalls als Offsetwert gespeichert wird, wenn das logische Signal in dem aktuellen Zeitintervall den ersten Wert hat beziehungsweise annimmt, und dass als Ersatzwert der Offsetwert des vorletzten Zeitintervalls als Offsetwert gespeichert wird, wenn das logische Signal in dem aktuellen Zeitintervall den zweiten Wert hat beziehungsweise annimmt. Aufgrund des Zeitrasters ist es möglich, in der Vergangenheit gespeicherte Offsetwerte als Ersatzwerte zu verwenden. Auf diese Weise wird sichergestellt, dass der Offsetwert, auch wenn der Offsetwert des vorletzten Zeitintervalls als Ersatzwert gespeichert wird, nicht übermäßig von dem tatsächlichen Offsetwert abweichen wird. Folglich wird eine Genauigkeit zur Verfügung gestellt, die im Sinne einer hohen Regelgüte beim ESP-System ist.

Es ist vorteilhaft, dass das logische Signal zwei verschiedene Werte annehmen kann, dass der erste Wert FALSE ist und dass der zweite Wert TRUE ist. Ein binäres logisches Signal lässt sich in einfacher Weise in digitalen Schaltungen verarbeiten.

Es ist nützlich, dass der tiefpassgefilterte Druckwert als Offsetwert gespeichert wird, wenn neben der Voraussetzung, dass das logische Signal einen ersten Wert hat beziehungsweise annimmt, weitere Voraussetzungen vorliegen. Diese weiteren Voraussetzungen hängen damit zusammen, dass kein Einfluss auf das Bremssystem ausgeübt wird, was einen exakten Offsetabgleich entgegensteht.

Beispielsweise ist es in diesem Zusammenhang vorteilhaft, dass die weiteren Voraussetzungen darin bestehen, dass die Vorlade- beziehungsweise die Rückförderpumpe nicht angesteuert sind beziehungsweise nicht nachlaufen und dass keine Unterspannung beziehungsweise kein Restdruck im System sind. Alle diese Voraussetzungen würden die exakte Bestimmung eines Offsetwertes behindern, so dass es nützlich ist, diese Voraussetzungen bei der Entscheidung, ob ein Offsetabgleich erfolgen soll oder nicht, mit zu berücksichtigen.

Es ist nützlich, wenn die Zeitintervalle des Zeitrasters eine Länge von circa 200 ms haben. Da eine typische Verzögerung zwischen einer schnellen Bremspedalbetätigung und dem Setzten des Bremslichtschalters beispielsweise im Bereich zwischen 20 und 60 ms liegen kann, ist ein Zeitraster mit einer Länge von 200 ms geeignet, die geeigneten Werte für die Offsetwertspeicherung zur Verfügung zu stellen.

Es ist nützlich, dass der Offsetwert in einem EEPROM gespeichert wird. Ein EEPROM ist ein Speicherbaustein, welcher geeignet ist, die Offsetwerte permanent zu speichern, wobei gleichwohl mit den vorteilhaften Zeitzyklen Änderungen des Speicherinhaltes auf elektrischem Wege vorgenommen werden können.

Die Erfindung baut auf der gattungsgemäßen Vorrichtung dadurch auf, dass der tiefpassgefilterte Druckwert als Offsetwert gespeichert wird, wenn zumindest die Voraussetzung vorliegt, dass ein logisches Signal einen ersten Wert hat beziehungsweise annimmt, und dass ein Ersatzwert als Offsetwert gespeichert wird, wenn das logische Signal einen zweiten Wert hat beziehungsweise annimmt. Auf diese Weise wird erreicht, dass ein neuer tiefpassgefilterter Druckwert als Offsetwert nur dann gespeichert wird, wenn eine bestimmte Voraussetzung vorliegt. Diese Voraussetzung liegt dann vor, wenn der Fahrer keinen Bremswunsch angezeigt hat, etwa durch plötzliches Betätigen des Bremspedals. Liegt allerdings ein solcher Bremswunsch vor, das heißt, das logische Signal hat einen zweiten Wert, so ist aus Sicherheitsgründen davon auszugehen, dass der Druck im System und damit der tiefpassgefilterte Druckwert bereits einen erhöhten Wert angenommen haben. Folglich wird der tiefpassgefilterte Druckwert in dem Fall, dass das logische Signal einen zweiten Wert hat, nicht als Offsetwert gespeichert. Vielmehr wird ein Ersatzwert herangezogen. Der Offsetabgleich wird also für einen Zeitraum, in welchem ein Bremswunsch vorliegt, eingefroren. In Zeiten ohne Bremswunsch findet der Offsetabgleich dann wieder kontinuierlich statt.

Es ist besonders vorteilhaft, wenn ein EEPROM zum Speichern des Offsetwertes vorgesehen ist. Ein EEPROM ist ein Speicherbaustein, welcher geeignet ist, die Offsetwerte permanent zu speichern, wobei gleichwohl mit den vorteilhaften Zeitzyklen Änderungen des Speicherinhaltes auf elektrischem Wege vorgenommen werden können.

Ferner ist nützlich, dass ein Zeitgeber vorgesehen ist und dass der Inhalt des EEPROM in von dem Zeitgeber vorgegebenen Intervallen aktualisiert wird. Aufgrund des Zeitrasters ist es möglich, in der Vergangenheit gespeicherte Offsetwerte als Ersatzwerte zu verwenden. Auf diese Weise wird sichergestellt, dass der Offsetwert, auch wenn der Offsetwert des vorletzten Zeitintervalls als Ersatzwert gespeichert wird, nicht übermäßig von dem tatsächlichen Offsetwert abweichen wird. Folglich wird eine Genauigkeit zur Verfügung gestellt, die im Sinne einer hohen Regelgüte beim ESP-System ist.

Nützlicherweise haben die von dem Zeitgeber vorgegebenen Intervalle eine Länge von circa 200 ms. Da eine typische Verzögerung zwischen einer schnellen Bremspedalbetätigung und dem Setzten des Bremslichtschalters beispielsweise im Bereich zwischen 20 und 60 ms liegen kann, ist ein Zeitraster mit einer Länge von 200 ms geeignet, die geeigneten Werte für die Offsetwertspeicherung zur Verfügung zu stellen.

Vorzugsweise sind Mittel zum Erfassen der Zustände der Vorlade- beziehungsweise der Rückförderpumpe vorgesehen. Hierdurch wird ermöglicht, die genannten Zustände bei der Entscheidung, ob ein Offsetabgleich stattfinden soll, mit zu berücksichtigen.

Der Erfindung liegt die Erkenntnis zugrunde, dass es möglich ist, den Abgleich der Druckoffsetwerte unter bestimmten Voraussetzungen einzufrieren. Insbesondere findet ein solches Einfrieren des Offsetabgleichs dann statt, wenn ein Bremswunsch eines Fahrers durch Setzen des Bremslichtschalters erkannt wird. Dann ist nämlich davon auszugehen, dass der Druck im Bremssystem nicht zum Offsetabgleich geeignet ist. Folglich wird ein Ersatzwert verwendet. Dieser Ersatzwert für den Offset ist vorzugsweise ein im vorletzten Zeitintervall vorliegender Offsetwert. Bei typischen Intervallen eines Zeitrasters wird somit ein Offsetwert als aktueller Offsetwert betrachtet, der in der Größenordnung einer halben Sekunde vor dem aktuellen Zeitpunkt liegt. Dies ist eine akzeptable Näherung, wobei nach wie vor ein gutes Funktionieren des Sicherheitssysteme, beispielsweise eines ESP-Systems, gewährleistet ist.

### Zeichnungen

Die Erfindung wird nun mit Bezug auf die begleitenden Zeichnungen anhand bevorzugter Ausführungsformen beispielhaft erläutert.

Dabei zeigt:
- Figur 1: ein Flussdiagramm zur Erläuterung der Erfindung;
- Figur 2: ein erstes Zeitdiagramm zur Erläuterung der Erfindung und
- Figur 3: ein zweites Zeitdiagramm zur Erläuterung der Erfindung.

### Beschreibung der Ausführungsbeispiele

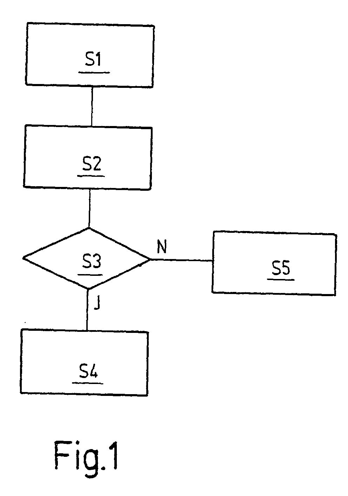

Figur 1 zeigt ein Flussdiagram zur Erläuterung der Erfindung. In dem Flussdiagramm repräsentieren die Symbole die folgenden Schritte:
- S1:: Detektieren eines Druckwertes.
- S2:: Tiefpassfiltern des detektierten Druckwertes.
- S3:: Logisches Bremslichtsignal = TRUE?
- S4:: Offsetwert des vorletzten Zeitintervalls als Offsetwert speichern.
- S5:: Tiefpassgefilterten Druckwert des vorigen Zeitintervalls als Offsetwert speichern.

In Schritt S1 wird ein Druckwert in einem Bremssystem detektiert. Dieser Druckwert beziehungsweise das Drucksensorsignal wird in Schritt S2 tiefpassgefiltert. In Schritt S3 wird geprüft, ob das Bremslichtsignal den logischen Wert TRUE hat. Ferner können an dieser Stelle des logischen Flussdiagramms weitere Voraussetzungen geprüft werden, nämlich ob eine Vorlade- oder Rückförderpumpe angesteuert sind beziehungsweise nachlaufen, ob eine Unterspannung im System vorliegt oder ob ein Restdruck im System vorhanden ist. Liegt beispielsweise die Voraussetzung, dass das Bremslichtsignal den logischen Wert TRUE hat, nicht vor (dass heißt das Bremslichtsignal hat den logischen Wert FALSE), geht der Programmablauf zu Schritt S5 über. Hier wird der tiefpassgefilterte Druckwert des vorigen Zeitintervalls als Offsetwert gespeichert. Andernfalls, das heißt beispielsweise, das Bremslichtsignal hat den logischen Wert TRUE, geht der Ablauf zu Schritt S4 über, somit wird der Offsetwert des vorletzten Zeitintervalls als Offsetwert gespeichert.

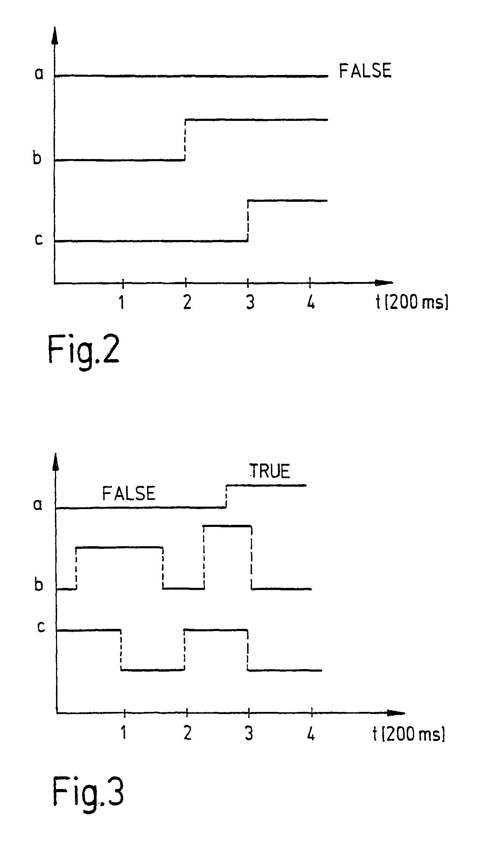

In Figur 2 ist ein Zeitdiagramm dargestellt, in welchem drei Signale in Abhängigkeit der Zeit t dargestellt sind. Die Zeit t ist in Einheiten von 200 ms angegeben, was dem verwendeten Zeitraster entspricht. Das Signal a ist das logische Bremslichtschaltersignal. Das Signal b ist der tiefpassgefilterte Druckwert. Das Signal c ist der abgespeicherte Offsetwert. Es ist zu erkennen, dass der tiefpassgefilterte Druckwert b nach dem 2. Zeitintervall einen anderen Zustand einnimmt. Da das Bremslichtschaltersignal a im 3. Zeitintervall den logischen Wert FALSE hat, wird der tiefpassgefilterte Druckwert aus dem 3. Intervall in dem 4. Zeitintervall als Offsetwert abgespeichert, was an dem Signalverlauf c zu erkennen ist.

In Figur 3 sind ebenfalls die drei Signal a, b und c in Abhängigkeit der Zeit dargestellt. Wiederum ist als Zeiteinheit 200 ms gewählt, was dem Zeitraster entspricht. Das Bremslichtschaltersignal a geht von dem logischen Zustand FALSE während des 3. Zeitintervalls in den logischen Zustand TRUE über. Im 3. Zeitintervall nimmt der tiefpassgefilterte Druckwert ebenfalls einen hohen Wert an. Erfindungsgemäß wird aufgrund der Änderung des Bremslichtschaltersignals a auf TRUE nun nicht der tiefpassgefilterte Druckwert als abgespeicherter Offsetwert übernommen. Vielmehr wird nach dem 3. Zeitintervall der abgespeicherte Offsetwert des vorletzten Zeitintervalls als Ersatzwert übernommen, so dass eine Verfälschung des Offsetabgleichs aufgrund eines verzögerten Bremslichtschaltersignals vermieden wird.

Die vorhergehende Beschreibung der Ausführungsbeispiele gemäß der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihre Äquivalente zu verlassen.

## Patentansprüche

1. Verfahren zum Abgleichen des Offset eines Druckwertes in einem Bremssystem mit den Schritten:
- Detektieren eines Druckwertes (S1)
- Tiefpassfiltern des Druckwertes (S2)
- Speichern des tiefpassgefilterten Druckwertes als Offsetwert (S5),
**dadurch gekennzeichnet,**
- **dass** der tiefpassgefilterte Druckwert als Offsetwert gespeichert wird (S5), wenn zumindest die Voraussetzung vorliegt, dass ein logisches Signal einen ersten Wert hat beziehungsweise annimmt, und
- **dass** ein Ersatzwert als Offsetwert gespeichert wird (S4), wenn das logische Signal einen zweiten Wert hat beziehungsweise annimmt,
- wobei das logisches Signal den ersten Wert annimmt, wenn der Fahrer keinen Bremswunsch angezeigt hat und
- das logische Signal den zweiten Wert annimmt, wenn der Fahrer einen Bremswunsch angezeigt hat.

2. Verfahren nach Anspruch 1 **dadurch gekennzeichnet,**
- **dass** das logische Signal den ersten Wert hat beziehungsweise annimmt, wenn ein Bremslichtschalter nicht gesetzt wird beziehungsweise ist und
- **dass** das logische Signal den zweiten Wert hat beziehungsweise annimmt, wenn ein Bremslichtschalter gesetzt wird beziehungsweise ist.

3. Verfahren nach Anspruch 1 oder 2, **dadurch gekennzeichnet,**
- **dass** eine Abfrage des logischen Signals in einem Zeitraster erfolgt, welches aufeinanderfolgende Zeitintervalle aufweist,
- **dass** der tiefpassgefilterte Druckwert des vorangehenden Zeitintervalls als Offsetwert gespeichert wird (S5), wenn das logische Signal in dem aktuellen Zeitintervall den ersten Wert hat beziehungsweise annimmt, und
- **dass** als Ersatzwert der Offsetwert des vorletzten Zeitintervalls als Offsetwert gespeichert wird (S4), wenn das logische Signal in dem aktuellen Zeitintervall den zweiten Wert hat beziehungsweise annimmt .

4. Verfahren nach einem der vorangehenden Ansprüche, **dadurch gekennzeichnet,**
- **dass** das logische Signal zwei verschiedene Werte annehmen kann,
- **dass** der erste Wert FALSE ist und
- **dass** der zweite Wert TRUE ist.

5. Verfahren nach einem der vorangehenden Ansprüche, **dadurch gekennzeichnet, dass** der tiefpassgefilterte Druckwert als Offsetwert gespeichert wird, wenn neben der Voraussetzung, dass das logische Signal einen ersten Wert hat beziehungsweise annimmt, weitere Voraussetzungen vorliegen.

6. Verfahren nach Anspruch 5, **dadurch gekennzeichnet, dass** die weiteren Voraussetzungen sind, dass Vorlade- beziehungsweise die Rückförderpumpe nicht angesteuert sind beziehungsweise nicht nachlaufen und dass keine Überspannung beziehungsweise kein Restdruck im System vorliegen.

7. Verfahren nach Anspruch 3, **dadurch gekennzeichnet, dass** die Zeitintervalle des Zeitrasters eine Länge von circa 200 ms haben.

8. Verfahren nach einem der vorangehenden Ansprüche, **dadurch gekennzeichnet, dass** der Offsetwert in einem EEPROM gespeichert wird.

9. Vorrichtung zum Abgleichen des Offset eines Druckwertes in einem Bremssystem mit
- Mitteln zum Detektieren eines Druckwertes,
- Mitteln zum Tiefpassfiltern des Druckwertes und
- Mitteln zum Speichern des tiefpassgefilterten Druckwertes als Offsetwert,
**dadurch gekennzeichnet,**
- **dass** der tiefpassgefilterte Druckwert als Offsetwert (S5) in den Mitteln gespeichert wird, wenn zumindest die Voraussetzung vorliegt, dass ein logisches Signal einen ersten Wert hat beziehungsweise annimmt, und
- **dass** ein Ersatzwert als Offsetwert in den Mitteln gespeichert wird (S4), wenn das logische Signal einen zweiten Wert hat beziehungsweise annimmt,
- wobei das logisches Signal den ersten Wert annimmt, wenn der Fahrer keinen Bremswunsch angezeigt hat und
- das logische Signal den zweiten Wert annimmt, wenn der Fahrer einen Bremswunsch angezeigt hat.

10. Vorrichtung nach Anspruch 9, **dadurch gekennzeichnet, dass** ein EEPROM zum Speichern des Offsetwertes vorgesehen ist.

11. Vorrichtung nach Anspruch 9 oder 10, **dadurch gekennzeichnet,**
- **dass** ein Zeitgeber vorgesehen ist und
- **dass** der Inhalt des EEPROM in von dem Zeitgeber vorgegebenen Intervallen aktualisiert wird.

12. Vorrichtung nach einem der Ansprüche 11, **dadurch gekennzeichnet, dass** die von dem Zeitgeber vorgegebenen Intervalle eine Länge von etwa 200 ms haben.

13. Vorrichtung nach einem der Ansprüche 9 bis 12, **dadurch gekennzeichnet, dass** Mittel zum Erfassen der Zustände der Vorlade- beziehungsweise der Rückförderpumpe vorgesehen sind.

## Claims

1. Method for compensating for the offset of a pressure value in a braking system, comprising the following steps:
- detecting a pressure value (S1),
- low-pass filtering of the pressure value (S2),
- storing the low-pass filtered pressure value as offset value (S5),
**characterized in that**
- the low-pass filtered pressure value is stored as offset value (S5) when at least the prerequisite exists that a logical signal has or assumes a first value, and that
- a substitute value is stored as offset value (S4) when the logical signal has or assumes a second value,
- wherein the logical signal assumes the first value when the driver has not indicated a desire for braking and
- the logical signal assumes the second value when the driver has indicated a desire for braking.

2. Method according to Claim 1, **characterized in that**
- the logical signal has or assumes the first value when a brake light switch is not set and that
- the logical signal assumes or has the second value when a brake light switch is set.

3. Method according to Claim 1 or 2, **characterized in that**
- the logical signal is interrogated in a timing pattern which has successive time intervals, that
- the low-pass filtered pressure value of the preceding time interval is stored as offset value (S5) when the logical signal has or assumes the first value in the current time interval, and that
- the offset value of the last-but-one time interval, as substitute value, is stored as offset value (S4) when the logical signal has or assumes the second value in the current time interval.

4. Method according to one of the preceding claims, **characterized in that**
- the logical signal can assume two different values, that
- the first value is FALSE, and that
- the second value is TRUE.

5. Method according to one of the preceding claims, **characterized in that** the low-pass filtered pressure value is stored as offset value when, apart from the prerequisite that the logical signal has or assumes a first value, further prerequisites are present.

6. Method according to Claim 5, **characterized in that** the further prerequisites are that the precharging or the return pump are not driven or do not follow on and that there is no excess voltage or no residual pressure present in the system.

7. Method according to Claim 3, **characterized in that** the time intervals of the timing pattern having a length of approx. 200 ms.

8. Method according to one of the preceding claims, **characterized in that** the offset value is stored in an EEPROM.

9. Device for compensating for the offset of a pressure value in a braking system, comprising
- means for detecting a pressure value,
- means for low-pass filtering of the pressure value, and
- means for storing the low-pass filtered pressure value as offset value,
**characterized in that**
- the low-pass filtered pressure value is stored in the means as offset value (S5) when at least the prerequisite exists that a logical signal has or assumes a first value, and that
- a substitute value is stored in the means as offset value (S4) when the logical signal has or assumes a second value,
- wherein the logical assumes the first value when the driver has not indicated a desire for braking and
- the logical signal assumes the second value when the driver has indicated a desire for braking.

10. Device according to Claim 9, **characterized in that** an EEPROM is provided for storing the offset value.

11. Device according to Claim 9 or 10, **characterized in that**
- a timer is provided and that
- the content of the EEPROM is updated at intervals predetermined by the timer.

12. Device according to Claim 11, **characterized in that** the intervals predetermined by the timer have a length of about 200 ms.

13. Device according to one of Claims 9 to 12, **characterized in that** means for detecting the states of the precharging pump or of the return pump are provided.

## Revendications

1. Procédé de compensation du décalage d'une valeur de pression dans un système de freinage, comprenant les étapes suivantes :
- détection d'une valeur de pression (S1) ;
- filtrage passe-bas de la valeur de pression (S2) ;
- mémorisation de la valeur de pression filtrée passe-bas comme valeur de décalage (S5) ;
**caractérisé en ce qu'**
- on mémorise la valeur de pression filtrée passe-bas comme valeur de décalage (S5) lorsqu'il y a au moins l'hypothèse qu'un signal logique a ou prend une première valeur, et
- on mémorise une valeur de remplacement comme valeur de décalage (S4), lorsque le signal logique a ou prend une deuxième valeur,
- le signal logique prenant la première valeur lorsque le conducteur n'a exprimé aucun souhait de freinage, et
- le signal logique prenant la deuxième valeur lorsque le conducteur a exprimé un souhait de freinage.

2. Procédé selon la revendication 1,
**caractérisé en ce que**
- le signal logique a ou prend la première valeur lorsqu'un commutateur de feu stop n'est pas enclenché ou ne s'enclenche pas, et
- le signal logique a ou prend la deuxième valeur lorsqu'un commutateur de feu stop est enclenché ou s'enclenche.

3. Procédé selon la revendication 1 ou 2,
**caractérisé en ce qu'**
- on effectue une interrogation du signal logique dans une grille temporelle, qui présente des intervalles de temps successifs,
- on mémorise la valeur de pression filtrée passe-bas de l'intervalle de temps précédent comme valeur de décalage (S5), lorsque le signal logique dans l'intervalle de temps actuel a ou prend la première valeur, et
- on mémorise la valeur de décalage comme valeur de remplacement de l'avant-dernier intervalle de temps comme valeur de décalage (S4), lorsque le signal logique dans l'intervalle de temps actuel a ou prend la deuxième valeur.

4. Procédé selon l'une des revendications précédentes,
**caractérisé en ce que**
- le signal logique peut prendre deux valeurs différentes,
- la première valeur est FAUX, et
- la deuxième valeur est VRAI.

5. Procédé selon l'une des revendications précédentes,
**caractérisé en ce qu'**
on mémorise la valeur de pression filtrée passe-bas comme valeur de décalage, lorsqu'il y a d'autres hypothèses outre celle que le signal logique a ou prend une première valeur.

6. Procédé selon la revendication 5,
**caractérisé en ce que**
les autres hypothèses sont que la pompe d'admission ou la pompe de refoulement ne sont pas commandées ou ne sont pas en retard et qu'il n'y a pas de surtension ou de pression résiduelle dans le système.

7. Procédé selon la revendication 3,
**caractérisé par**
des intervalles de temps de la grille temporelle d'une longueur d'environ 200 ms.

8. Procédé selon l'une des revendications précédentes,
**caractérisé en ce qu'**
on mémorise la valeur de décalage dans une EEPROM.

9. Dispositif de compensation du décalage d'une valeur de pression dans un système de freinage comportant
- des moyens pour détecter une valeur de pression,
- des moyens de filtrage passe-bas de la valeur de pression, et
- des moyens pour mémoriser la valeur de pression filtrée passe-bas comme valeur de décalage,
**caractérisé en ce que**
- la valeur de pression filtrée passe-bas est mémorisée dans les moyens comme valeur de décalage (S5) lorsqu'il y a au moins l'hypothèse qu'un signal logique a ou prend une première valeur, et
- une valeur de remplacement est mémorisée dans les moyens comme valeur de décalage (S4), lorsque le signal logique a ou prend une deuxième valeur,
- le signal logique prenant la première valeur lorsque le conducteur n'a exprimé aucun souhait de freinage, et
- le signal logique prenant la deuxième valeur lorsque le conducteur a exprimé un souhait de freinage.

10. Dispositif selon la revendication 9,
**caractérisé par**
une EEPROM pour mémoriser la valeur de décalage.

11. Dispositif selon la revendication 9 ou 10,
**caractérisé en ce que**
- il est prévu un registre d'horloge,
- le contenu de l'EEPROM est actualisé à des intervalles prédéterminés par le registre d'horloge.

12. Dispositif selon la revendication 11,
**caractérisé en ce que**
les intervalles prédéterminés par le registre d'horloge ont une longueur d'environ 200 ms.

13. Dispositif selon l'une des revendications 9 à 12,
**caractérisé par**
des moyens pour détecter les états de la pompe d'admission ou de la pompe de refoulement.
